# EUROPÄISCHE PATENTANMELDUNG

(11) **EP 4 272 977 A1**
(43) Veröffentlichungstag der Anmeldung: **08.11.2023**
(21) Anmeldenummer: 23162761.3
(22) Anmeldetag: 20.03.2023
(51) Int. Cl.: B60C 15/024, B60C 15/06

(54) **FAHRZEUGLUFTREIFEN**

(30) Priorität: 06.05.2022 DE 102022204474
(71) Anmelder: Continental Reifen Deutschland GmbH, 30165 Hannover (DE)
(72) Erfinder: Henze, Eugen, 30165 Hannover (DE); Fernandes de Alencar, Maria Izabel, 30165 Hannover (DE); Fischer, Markus, 30165 Hannover (DE)
(74) Vertreter: Continental Corporation

(57) **Zusammenfassung**

Die Erfindung betrifft einen Fahrzeugluftreifen (10) mit einem Laufstreifen (1), zwei Seitenwänden (6) und zwei Wulstbereichen (5), wobei der Fahrzeugluftreifen (10) zur Montage auf eine Felge (11) mit einem gekrümmten Felgenhornbereich (12) geeignet ist und wobei axial außenseitig zumindest auf einer Seitenwand (6) eine über den Umfang derselben vorstehende und umlaufende Wulstlippe (9) ausgebildet ist, die eine Wulstlippenoberfläche (13) aufweist, welche zur Auflage auf dem gekrümmten Felgenhornbereich (12) bestimmt ist, wobei die Seitenwand (6) benachbart zur Wulstlippe (9) einen in die Seitenwand (6) integrierten eigenschaftsmodifizierenden Gummistreifen (30) aufweist.

## Beschreibung

Die Erfindung betrifft einen Fahrzeugluftreifen mit einem Laufstreifen und zwei in Wulstbereichen endenden Seitenwänden, wobei der Fahrzeugluftreifen zur Montage auf einer Felge mit einem gekrümmten Felgenhornbereich geeignet ist und wobei axial außenseitig zumindest auf einer Seitenwand eine über den Umfang derselben vorstehende und umlaufende Wulstlippe ausgebildet ist, die eine Wulstlippenoberfläche aufweist, welche zur Auflage auf dem gekrümmten Felgenhornbereich bestimmt ist.

Fahrzeugluftreifen der eingangs genannten Art sind bekannt und werden beispielsweise für PKWs sowie Transporter in verschiedenster Ausführung hergestellt. Durch eine über den Umfang der Seitenwand vorstehende und umlaufende Wulstlippe, die auf dem gekrümmten Felgenhornbereich aufliegt, kann einerseits das Felgenhorn vor mechanischen Beschädigungen zum Beispiel durch Bordsteinkontakt geschützt werden, andererseits kann auch das Eindringen von Sand in die Trennfuge zwischen Felgenhorn und Seitenwand des Fahrzeugluftreifens verhindert werden, um nachteiligen Abriebserscheinungen entgegenzuwirken. Ein solcher Fahrzeugluftreifen ist beispielhaft in der DE 10 2019 218 120 A1 offenbart.

Fahrzeugluftreifen mit hoher Auslastung und entsprechend hoher Tragfähigkeit, die beispielsweise im kommerziellen Transporterbereich eingesetzt werden, sind häufig mit Verstärkungselementen im Bereich des Wulstes ausgestattet, um der erhöhten Belastung Rechnung zu tragen. Diese können zum Beispiel Gewebestreifen sein, die einen Winkelverband mit der Karkasse bilden. Als Folge wird die Bewegung des Fahrzeugluftreifens im Bereich des Wulstes reduziert und dessen Haltbarkeit verbessert. Allerdings geht die Anordnung von Verstärkungselementen, insbesondere in Form steiferer Materialien, dickerer Polsterung und aufwändigerer Konstruktionen stets mit Nachteilen im Rollwiderstand, Komfort und höheren Materialkosten einher.

Aufgabe der Erfindung ist es daher, einen Fahrzeugluftreifen der eingangs genannten Art vorzuschlagen, der bei verbessertem Rollwiderstand mit geringeren Materialkosten und verringertem Gewicht eine deutlich höhere Wulsthaltbarkeit und entsprechende Belastbarkeit zum Beispiel für Anwendungen im Transporterbereich aufweist.

Zur Lösung der gestellten Aufgabe wird erfindungsgemäß die Ausgestaltung eines Fahrzeugluftreifens gemäß den Merkmalen des Patentanspruchs 1 vorgeschlagen.

Vorteilhafte Ausgestaltungen und Weiterbildungen der Erfindung sind Gegenstand der abhängigen Ansprüche.

Erfindungsgemäß wird vorgeschlagen, dass die Seitenwand benachbart zur Wulstlippe einen in die Seitenwand integrierten eigenschaftsmodifizierenden Gummistreifen aufweist.

Durch die erfindungsgemäße Kombination der aus einer Seitenwand über den Umfang vorstehenden und umlaufenden Wulstlippe, die zur Anlage auf dem gekrümmten Felgenhornbereich bestimmt ist, sowie dem in die Seitenwand integrierten Gummistreifen wird ein Seitenwandaufbau erreicht, der sich durch signifikant veränderte Eigenschaften je nach Anforderungsprofil des Fahrzeugluftreifens auszeichnet.

Beispielsweise kann der Gummistreifen eine erhöhte Steifigkeit gegenüber dem angrenzenden Material der Seitenwand aufweisen und damit eine besonders hohe Stützwirkung im Wulstbereich bewirken.

Nach einem Vorschlag der Erfindung ist vorgesehen, dass der in die Seitenwand integrierte Gummistreifen eine um -20% bis 60%, vorzugsweise um -15% bis 55% von der Steifigkeit der angrenzenden Bereiche der Seitenwand abweichende Steifigkeit aufweist.

Auch kann der Gummistreifen je nach Einstellung des für die Ausbildung des Gummistreifens verwendeten Gummimaterials eine gleiche, höhere oder insbesondere geringere Hysterese als die der angrenzenden Bereiche der Seitenwand aufweisen und so den Rollwiderstand des Fahrzeugluftreifens verbessern.

Die auf dem Felgenhornbereich zur Auflage kommende Wulstlippe bewirkt zudem eine formschlüssige Abstützung des Seitenwandbereichs im Übergang zum Wulstbereich auf dem Felgenhorn, wobei gleichzeitig dieser Bereich der Seitenwand durch den integrierten Gummistreifen verstärkt und/oder in seinen Eigenschaften modifiziert wird. Im Ergebnis zeigt sich somit eine solche Festigkeit und Stützwirkung der Seitenwand, dass auf üblicherweise eingelegte Gewebestreifen zur Erhöhung der Belastbarkeit und Tragfähigkeit verzichtet werden kann. Nachteile in Bezug auf Rollwiderstand und Materialkosten werden somit reduziert, ohne Einbußen bei der Wulsthaltbarkeit hinnehmen zu müssen.

Im Sinne der Erfindung bedeutet ein in die Seitenwand integrierter Gummistreifen eine Anordnung unter teilweisem oder auch vollständigem Einschluss des Gummistreifens in die Seitenwand. Ein teilweise in die Seitenwand eingeschlossener Gummistreifen ist im Bereich einer Oberfläche der vereinzelten Seitenwand sichtbar, ein vollständig in die Seitenwand eingeschlossener Gummistreifen ist hingegen in der vereinzelten Seitenwand des erfindungsgemäßen Fahrzeugluftreifens nicht sichtbar.

Die Integration des Gummistreifens in die Seitenwand kann beispielsweise durch Einextrudieren des Gummistreifens in das Seitenwandmaterial oder durch Auflage eines entsprechenden Gummistreifens auf das Seitenwandmaterial vor oder während des Reifenbauprozesses erfolgen.

Nach einem Vorschlag der Erfindung ist die Seitenwand an sich, d.h. ohne Einbeziehung des erfindungsgemäßen Gummistreifens, mindestens einteilig, ggf. auch mehrteilig ausgebildet. Eine mehrteilige Ausführung kann z.B. durch Ausbildung der Seitenwand einschließlich eines sogenannten "Rim-Strips" benachbart zum Wulstbereich erfolgen. Auch in eine solche mehrteilige Ausbildung einer Seitenwand mit Rim-Strip kann gemäß der Erfindung zusätzlich der eigenschaftsmodifizierende Gummistreifen integriert werden.

Nach einem weiteren Vorschlag der Erfindung ist der Gummistreifen im montierten Zustand des Fahrzeugluftreifens auf der Felge zumindest teilweise radial oberhalb des Felgenhornbereichs in der Seitenwand integriert, um den Seitenwandbereich radial oberhalb der Wulstlippe zu modifizieren, in welchem bei formschlüssiger Abstützung der Wulstlippe auf dem Felgenhornbereich die höchsten Kräfte zu erwarten sind.

Nach einem weiteren Vorschlag der Erfindung erstreckt sich der Gummistreifen in radialer Richtung des Fahrzeugluftreifens betrachtet von einem unterhalb der Wulstlippe befindlichen Bereich bis in einen oberhalb der Wulstlippe befindlichen Bereich innerhalb der Seitenwand, um die Seitenwand des Fahrzeugluftreifens in diesem hoch belasteten Bereich optimal zu verstärken.

Nach einem weiteren Vorschlag der Erfindung ist die Wulstlippe des Fahrzeugluftreifens so angeordnet, dass die Wulstlippenoberfläche in montierten Zustand des Fahrzeugluftreifens auf der Felge umlaufend auf dem Felgenhornbereich zur Anlage kommt, wobei insbesondere ein leichter Presssitz der Wulstlippenoberfläche auf den Felgenhornbereich bevorzugt ist, um eine zuverlässige Abdichtung und formschlüssige Abstützung sicherzustellen.

Insbesondere kann die Wulstlippenoberfläche von einer Reifenaußenseite her betrachtet konkav gekrümmt sein und einen Krümmungsradius aufweisen, der geringfügig kleiner als der Krümmungsradius des Felgenhornbereichs ist, sodass sich in unmontiertem Zustand zwischen der Wulstlippe im Bereich der Wulstlippenoberfläche und des gekrümmten Felgenhorns eine Überschneidung bildet, die bei auf der Felge montiertem Fahrzeugluftreifen die gewünschte Presspassung ermöglicht.

Wie auch bereits in der eingangs erwähnten DE 10 2019 218 120 A1 beschrieben, auf deren Offenbarungsgehalt diesbezüglich hier Bezug genommen werden kann, kann beispielsweise die Felge ein J-Profil gemäß E. T. R. T. O. (European Tire and Rim Technical Organization) oder gemäß TRA (The Tire and Rim Association) handeln. Diese weisen einen als "R1" bezeichneten Felgenhornradius von mindestens 9,5 mm auf.

In einem solchen Fall weist die Wulstlippenoberfläche vorteilhaft einen Kreisbogen mit Radius R2 kleiner 9,5 mm auf wobei weiter bevorzugt der Radius R2 der Wulstlippenoberfläche ein Verhältnis R2/9,5 mm von 0,57-0,82, bevorzugt von 0,65-0,73 erfüllt.

In jedem Fall sollte sichergestellt sein, dass das Verhältnis des Krümmungsradius R2 der Wulstlippenoberfläche zu dem Krümmungsradius R1 des Felgenhornbereichs < 1 ist.

Der erfindungsgemäße Fahrzeugluftreifen ist insbesondere für einen Transporter geeignet und mit einem gegenüber PKW-Reifen erhöhtem Tragfähigkeitsindex ausgebildet.

Gegenstand der Erfindung ist ferner auch ein Fahrzeugrad mit einem auf einer Felge montierten Fahrzeugluftreifen gemäß der Erfindung, wie vorangehend beschrieben.

Weitere Ausgestaltungen und Einzelheiten der Erfindung werden nachfolgend anhand der ein Ausführungsbeispiel darstellende Zeichnung erläutert. Es zeigen:
- Figur 1: in schematisierten Darstellung einen Teilschnitt durch einen erfindungsgemäßen Fahrzeugluftreifen;
- Figur 2: eine vergrößerte Darstellung des Seitenwand- und Wulstbereiches des Fahrzeugluftreifens gemäß Figur 1 in einer ersten Ausführungsform;
- Figur 3: eine vergrößerte Darstellung des Seitenwand- und Wulstbereiches des Fahrzeugluftreifens gemäß Figur 1 in einer zweiten Ausführungsform.

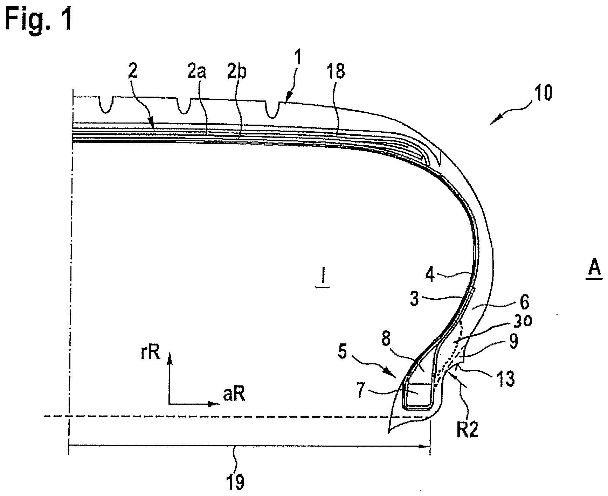

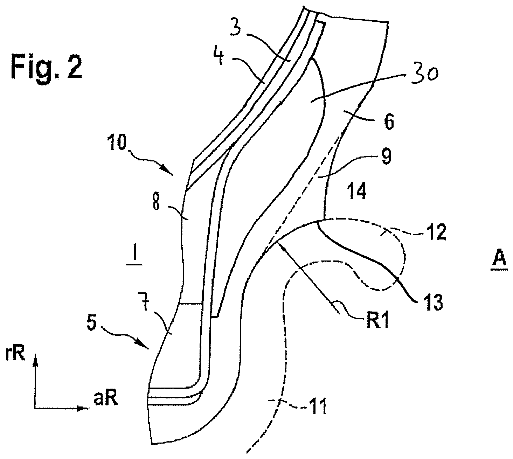

Die Figur 1 zeigt einen Teil-Querschnitt durch einen als Radialreifen ausgebildeten Fahrzeugluftreifen 10, welcher einen profilierten Laufstreifen 1, einen aus zwei Lagen 2a, 2b bestehenden Gürtel 2, welcher durch eine Bandage 18 abgedeckt ist, eine Radialkarkasse 3, eine luftdicht ausgeführte Innenschicht 4, Seitenwände 6 sowie den Wulstbereich 5 mit Wulstkernen 7 und Kernprofilen 8 aufweist. Die Seitenwände 6 enden dabei radial innenseitig des Laufstreifens 1 in den Wulstbereichen 5. Der solchermaßen ausgebildete Fahrzeugluftreifen 10 ist geeignet zur Montage auf einer Felge 11 mit einem gekrümmten Felgenhornbereich 12 eines Felgenhornradius R1 von mindestens 9,5 mm, siehe Figur 2.

Am Fahrzeugluftreifen 10 ist axial im Bereich der Reifenaußenseite A zumindest auf einer Seitenwand 6 eine über den Umfang der Seitenwand 6 umlaufende Wulstlippe 9 angeordnet. Diese Wulstlippe 9 weist axial zur Reifenaußenseite A vorstehend eine Wulstlippenoberfläche 13 auf, die im dargestellten Ausführungsbeispiel umlaufend und durchgängig zur Auflage auf dem gekrümmten Felgenhornbereich 12 bestimmt ist. Die Wulstlippenoberfläche 13 ist dazu von der Reifenaußenseite A her betrachtet konkav gekrümmt und weist einen Krümmungsradius R2 auf, der kleiner als der Krümmungsradius R1 des Felgenhornbereichs 12 ausgebildet ist, d. h. der Krümmungsradius R2 ist kleiner als 9,5 mm ausgebildet.

Es kann sich beim dargestellten Fahrzeugluftreifen 10 beispielsweise um einen Radialreifen erhöhter Tragfähigkeit mit entsprechendem Tragfähigkeitsindex für einen Transporter handeln.

Die Wulstlippenoberfläche 13 weist einen Kreisbogen 14 mit einem Krümmungsradius R2 kleiner 9,5 mm auf, wobei bevorzugt ein Verhältnis R2/9,5 mm von etwa 0,57-0,82, bevorzugt von 0,65-0,73 vorgesehen ist.

Die im Bereich der Reifenaußenseite A vorgesehene Wulstlippe 9 steht axial außenseitig in axialer Richtung aR über die strichliert dargestellte Kontur der Seitenwand 6 des Fahrzeugluftreifens 10 vor und ist so angeordnet, dass im unmontierten Zustand eine Überschneidung zumindest des radial außenseitigen Bereichs gegenüber dem gekrümmten Felgenhornbereich 12 auftritt, dessen Auflagefläche entlang einer Kreisbahn 14 mit dem Krümmungsradius R1 von hier 9,5 mm verläuft.

Diese Überschneidung sorgt dafür, dass im montierten Zustand gemäß Figur 2 die Wulstlippe 9 mit ihrer Wulstlippenoberfläche 13 unter Erzeugung einer Presspassung auf die Oberfläche des gekrümmten Felgenhornbereichs 12 gepresst wird und insoweit sich die Wulstlippe 9 formschlüssig an der auf der Kreisbahn 14 liegenden Oberfläche des Felgenhornbereichs 12 abstützt.

Zugleich erkennt man in den Figuren, dass benachbart zu der sich auf dem Felgenhornbereich 12 durch Auflage abstützenden Wulstlippe 9 innerhalb der Seitenwand 6 ein Gummistreifen 30 integriert ist, z.B. durch Einextrudieren in die Seitenwand 6, der sich im in der Figur 2 dargestellten montierten Zustand des Fahrzeugluftreifens 10 auf der Felge 11 von einem unterhalb der Wulstlippe 9 befindlichen Bereich bis in einen oberhalb der Wulstlippe 9 befindlichen Bereich in der Seitenwand 6 erstreckt, wenn der Fahrzeugluftreifen 10 wie in Figur 2 dargestellt in radialer Richtung rR betrachtet wird. Dabei ist die Radialkarkasse 3, welche um den Wulstkern 7 und den Kernreiter axial außenseitig herumgeschlagen ist, bis in einen in radialer Richtung rR oberhalb des Gummistreifens 30 befindlichen Bereich hochgezogen und gedoppelt.

Diese Integration des Gummistreifens 30 in die Seitenwand 6 hat zur Folge, dass die Seitenwand 6 des Fahrzeugluftreifens in demjenigen Bereich der Seitenwand 6, der aus dem zwischen den Felgenhornbereichen 12 eingeschlossenen Felgenmaul austritt, durch den Gummistreifen 30 je nach Materialauswahl desselben in seinen Eigenschaften modifiziert wird, beispielsweise verstärkt wird. In einem solchen Fall erfährt die Seitenwand 6 in demjenigen Bereich eine Verstärkung, welcher die von der Wulstlippe 9 durch Abstützung aufgenommenen Kräfte in die Seitenwand 6 einleitet.

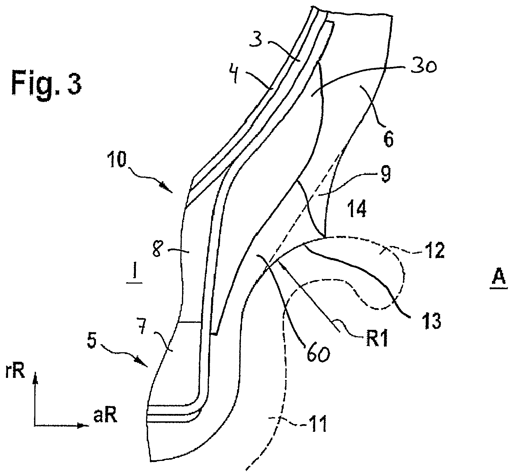

Zu diesem Zweck ist der Gummistreifen 30 aus einer Gummimischung gebildet, die beispielsweise eine höhere Steifigkeit als die Gummimischung aufweist, aus der die an den Gummistreifen 30 angrenzenden Bereiche der Seitenwand 6 gebildet sind. Die Steifigkeit des Gummistreifens 30 variiert vorteilhaft von -20% bis 60% gegenüber dem Material der angrenzenden Bereiche der Seitenwand 6 und ggf. einem angrenzenden Rim strip 60 gemäß Figur 3, vorzugsweise etwa von -15% bis 55%.

Er kann zur Verringerung der Hysterese auch aus einer entsprechenden Gummimischung mit geringerer Hysterese als das Material der angrenzenden Bereiche der Seitenwand 6 gebildet sein, um z.B. die Rollwiderstandseigenschaften des Fahrzeugluftreifens zu optimieren. Die Hysterese des Gummistreifens 30 kann, in Abhängigkeit der direkt angrenzenden Bereiche der Seitenwand 6 kleiner, gleich oder höher als diejenige der angrenzenden Bereiche der Seitenwand 6 sein, wobei die eingesetzte Mischung bevorzugt eine geringere Hysterese aufweist.

Zumindest in seinem radial unteren Bereich ist der Verstärkungsbereich 30 zudem benachbart zu den aus Wulstkern 7 und Kernreiter 8 gebildeten Wulstbereich 5 angeordnet.

Der Fahrzeugluftreifen 10 erhält durch diese Ausgestaltung eine besonders hohe Steifigkeit, sodass auf zusätzliche bisher übliche Verstärkungselemente verzichtet werden kann. Trotz seiner hohen Stabilität und der beispielsweise für Anwendungen im Transporterbereich geeigneten Tragfähigkeit kann somit der dargestellte Fahrzeugluftreifen ohne zusätzliche Gewebeeinlagen zur Verstärkung der Seitenwand 6 auskommen, die sich nachteilig auf den Rollwiderstand, Komfort und die Herstellungskosten eines solchen Fahrzeugluftreifens 10 auswirken würden.

Es versteht sich, dass der vorangehend erläuterte Fahrzeugluftreifen neben Transportern auch für andere Anwendungsfälle, beispielsweise PKWs, Vans sowie leichte Nutzfahrzeuge geeignet ist.

Die Figur 3 zeigt eine gegenüber dem Ausführungsbeispiel der Figur 2 abgewandelte Ausführungsform, bei der die Seitenwand 6 nicht wie in Figur 2 einteilig, sondern zweiteilig mit einem unteren sogenannten Rim Strip 60, der einen weiteren Teil der Seitenwand 6 bildet. Alle übrigen Teile des Fahrzeugluftreifens 10 weisen gleiche Bezugszeichen wie in Figur 2 auf und werden zur Vermeidung von Wiederholungen nicht nochmals gesondert erläutert.

Der eigenschaftsmodifizierende Gummistreifen 30 erstreckt sich in radialer Richtung rR neben dem Rim Strip 60 bis in den darüber befindlichen Bereich der Seitenwand 6.

### Bezugszeichenliste

- 1: Laufstreifen
- 2: Gürtel
- 3: Karkasse
- 4: Innenschicht
- 5: Wulstbereich
- 6: Seitenwand
- 7: Wulstkern
- 8: Kernreiter
- 9: Wulstlippe
- 10: Fahrzeugluftreifen
- 11: Felge
- 12: Felgenhornbereich
- 13: Wulstlippenoberfläche
- 14: Kreisbogen
- 30: Gummistreifen
- 60: Rim Strip
- R1: Felgenhornradius
- R2: Krümmungsradius
- A: Reifenaußenseite
- I: Reifeninnenseite
- rR: radiale Richtung
- aR: axiale Richtung

## Patentansprüche

1. Fahrzeugluftreifen (10) mit einem Laufstreifen (1) und zwei in Wulstbereichen (5) endenden Seitenwänden (6), wobei der Fahrzeugluftreifen (10) zur Montage auf eine Felge (11) mit einem gekrümmten Felgenhornbereich (12) geeignet ist und wobei axial außenseitig zumindest auf einer Seitenwand (6) eine über den Umfang derselben vorstehende und umlaufende Wulstlippe (9) ausgebildet ist, die eine Wulstlippenoberfläche (13) aufweist, welche zur Auflage auf dem gekrümmten Felgenhornbereich (12) bestimmt ist, **dadurch gekennzeichnet, dass** die Seitenwand (6) benachbart zur Wulstlippe (9) einen in die Seitenwand (6) integrierten eigenschaftsmodifizierenden Gummistreifen (30) aufweist.

2. Fahrzeugluftreifen (10) nach Anspruch 1, **dadurch gekennzeichnet, dass** die Seitenwand (6) ein- oder mehrteilig ausgebildet ist.

3. Fahrzeugluftreifen (10) nach Anspruch 1 oder 2, **dadurch gekennzeichnet, dass** der Gummistreifen (30) eine um -20% bis 60% von der Steifigkeit der angrenzenden Bereiche der Seitenwand 6 abweichende Steifigkeit und/oder eine geringere Hysterese als die angrenzenden Bereiche der Seitenwand (6) aufweist.

4. Fahrzeugluftreifen (10) nach einem der Ansprüche 1 bis 3, **dadurch gekennzeichnet, dass** der Gummistreifen (30) in montiertem Zustand des Fahrzeugluftreifens (10) auf der Felge (11) zumindest teilweise radial oberhalb des Felgenhornbereichs (12) in der Seitenwand (6) angeordnet ist.

5. Fahrzeugluftreifen (10) nach einem der Ansprüche 1 bis 4, **dadurch gekennzeichnet, dass** sich in radialer Richtung (rR) des Fahrzeugluftreifens (10) betrachtet der Gummistreifen (30) von einem unterhalb der Wulstlippe (9) befindlichen Bereich bis in einen oberhalb der Wulstlippe (9) befindlichen Bereich innerhalb der Seitenwand (6) erstreckt.

6. Fahrzeugluftreifen (10) nach einem der Ansprüche 1 bis 5, **dadurch gekennzeichnet, dass** in montiertem Zustand des Fahrzeugluftreifens (10) auf der Felge (11) die Wulstlippenoberfläche (13) umlaufend auf dem Felgenhornbereich (12) zur Anlage kommt.

7. Fahrzeugluftreifen (10) nach einem der Ansprüche 1 bis 6, **dadurch gekennzeichnet, dass** die Wulstlippenoberfläche (13) von einer Reifenaußenseite (A) her betrachtet konkav gekrümmt ist und einen Krümmungsradius (R2) aufweist, der kleiner als der Krümmungsradius (R1) des Felgenhornbereichs (12) ausgebildet ist.

8. Fahrzeugrad mit einem auf einer Felge (11) montierten Fahrzeugluftreifen (10) gemäß einem der vorangehenden Ansprüche.
